# EUROPÄISCHE PATENTSCHRIFT

(11) **EP 3 687 866 B1**
(45) Veröffentlichungstag und Bekanntmachung des Hinweises auf die Patenterteilung: **26.01.2022**
(21) Anmeldenummer: 19728314.6
(22) Anmeldetag: 17.05.2019
(51) Int. Cl.: B60R 21/215

(54) **ABDECKUNGSANORDNUNG EINES AIRBAGS**
COVERING ASSEMBLY OF AN AIRBAG
ENSEMBLE DE RECOUVREMENT D'UN COUSSIN GONFLABLE DE SÉCURITÉ

(30) Priorität: 24.08.2018 DE 102018006706
(43) Veröffentlichungstag der Anmeldung: 05.08.2020
(73) Patentinhaber: K.L. Kaschier- und Laminier GmbH, 48455 Bad Bentheim-Gildehaus (DE)
(72) Erfinder: SCHULZE WEHNINCK, Rembert, 82327 Tutzing (DE); RORING, Albert, 48599 Gronau-Epe (DE)
(74) Vertreter: Cohausz Hannig Borkowski Wißgott
(86) Internationale Anmeldenummer: PCT/EP2019/000151
(87) Internationale Veröffentlichungsnummer: WO 2020/038594

(56) Entgegenhaltungen:
- EP-A1- 1 393 994
- EP-A1- 2 727 775
- DE-A1-102012 109 350
- DE-A1-102016 217 659
- DE-A1-102017 100 330

## Beschreibung

Die Erfindung betrifft eine Abdeckungsanordnung über dem Schusskanal eines Airbags mit einer Airbagdurchtrittsöffnung, die mit einer Airbagklappe und einer über der Airbagklappe befestigten insbesondere aufgespritzten Abdeckung aus Kunststoff verschlossen ist, wobei die Abdeckung am Rand der Airbagklappe mindestens eine Sollbruchlinie aufweist, um das Entfalten des Airbagkissens zu ermöglichen, und wobei die Airbagklappe über eine Gelenkstelle mit einer Klappenstützwand angeformt verbunden ist, die auf der Innenseite der Schusskanalwand befestigt anliegt.

Eine Abdeckungsanordnung dieser Art ist aus der EP 2 727 775 A1 bekannt. Bei Airbags ist darauf zu achten, dass die Airbagklappe beim Entfalten des Airbagkissens sicher gehalten ist und sich nicht löst, um in den Fahrgastraum zu fliegen.

Ferner ist es aus der EP 1 393 994 A1 und DE 10 2012109 350 A1 bekannt, das innenseitige Ende der Klappenstützwand eines Airbags nach außen im Querschnitt U-förmig umzubiegen und mit diesem hakenförmig umgebogenen Bereich das untere Ende der Schussanalwand zu untergreifen. Auch ist es aus der DE 10 2019 100 330 A1 bekannt, das untere Ende der Klappenstützwand in dem Material der Schusskanalwand einzuformen.

Aufgabe der Erfindung ist es, einen noch sicheren Halt für die Airbagklappe eines Airbags zu schaffen.

Diese Aufgabe wird erfindungsgemäß dadurch gelöst,
a) dass das innenseitige Ende der Klappenstützwand nach außen im Querschnitt V- oder U-förmig umgebogen ist und mit diesem hakenförmig umgebogenen Bereich im Kunststoffmaterial der Schusskanalwand einliegt oder das untere Ende der Schusskanalwand untergreift und
b) dass die Airbagklappe und/oder die Klappenstützwand nahe der Gelenkstelle ein Materialreservoir in Form einer Faltung oder Wellung aufweist,
c) dass das innenseitige untere Ende der Klappenstützwand ein Materialreservoir in Form einer Faltung oder Wellung aufweist, von der der umgebogene Bereich abgebogen ist.

Hierdurch ist dafür gesorgt, dass die Klappenstützwand, an der die Airbagklappe angeformt ist, sicher an der Schusskanalwand gehalten ist, so dass die Airbagklappe sich nicht lösen kann.

Ferner soll der Airbagklappe ein zusätzlicher Bewegungsweg gegeben sein, ohne sich von der Airbaganlage zu lösen. Hierzu wird vorgeschlagen, dass das äußere Ende des umgebogenen Bereichs der Klappenstützwand noch einmal im Querschnitt V- oder U-förmig umgebogen ist und damit das innenseitige Ende der Klappenstützwand einen Z-förmigen Querschnitt aufweist.

Eine hohe Materialfestigkeit wird erreicht, wenn die Airbagklappe und die Klappenstützwand aus einem Verbundwerkstoff bestehen mit mindestens einer Lage aus Kunststoffbändern oder -fasern insbesondere aus thermoplastischem Polypropylen oder Polyester und mindestens einer darauf geschmolzenen Kunststofflage. Hierbei können die Kunststoffbänder oder-fasern ein Gewebe bilden.

Ausführungsbeispiele der erfindungsgemäßen Abdeckungsanordnung eines Airbags sind in den Zeichnungen in Querschnitten in Ausschnitten schematisch dargestellt und werden im Folgenden näher beschrieben. Es zeigen
- Fig. 1: eine eine Airbagklappe haltende Klappenstützwand mit hakenförmigem Endbereich und Faltung nahe der Gelenkstelle,

- Fig. 2: eine eine Airbagklappe haltende Klappenstützwand mit hakenförmigem Endbereich und Faltung oder Wellung der Airbagklappe nahe der Gelenkstelle,
- Fig. 3: eine eine Airbagklappe haltende Klappenstützwand mit hakenförmigem Endbereich mit zusätzlicher Faltung,
- Fig. 4: eine eine Airbagklappe haltende Klappenstützwand mit U-förmig umgebogenem Endbereich unter dem unteren Ende der Schusskanalwand und einer Faltung oder Wellung nahe der Gelenkstelle.

Die Airbaganordnung besitzt einen das Prallkissen 7 aufnehmenden Raum 12, der den Schusskanal bildet, von Schusskanalwänden 9 umgeben ist und von einer Abdeckung 2 verschlossen ist, die Sollbruchlinien 2a aufweist. Die Abdeckung 2 bildet eine Airbagdurchtrittsöffnung, wenn nach Auslösen des Prallkissens 7 die Abdeckung 2 an den Sollbruchlinien aufreißt und nach außen aufklappt. Hierbei bleibt die von der Abdeckung 2 gebildete Klappe mit einem Rand, das ein Gelenk 11 bildet, an der übrigen Abdeckung befestigt.

Die Abdeckung 2 ist von einer Schaumschicht 5 bedeckt, auf der außen ein dekoratives Oberflächenmaterial 6 aufliegt.

Auf der Unterseite der Abdeckung 2 ist mindestens eine Airbagklappe 1 befestigt, wobei die Abdeckung 2 auf die Airbagklappe 1 aufgespritzt ist. Das Material der Airbagklappe 1 und das Herstellungsverfahren sind in der EP 2 727 775 A1 beschrieben.

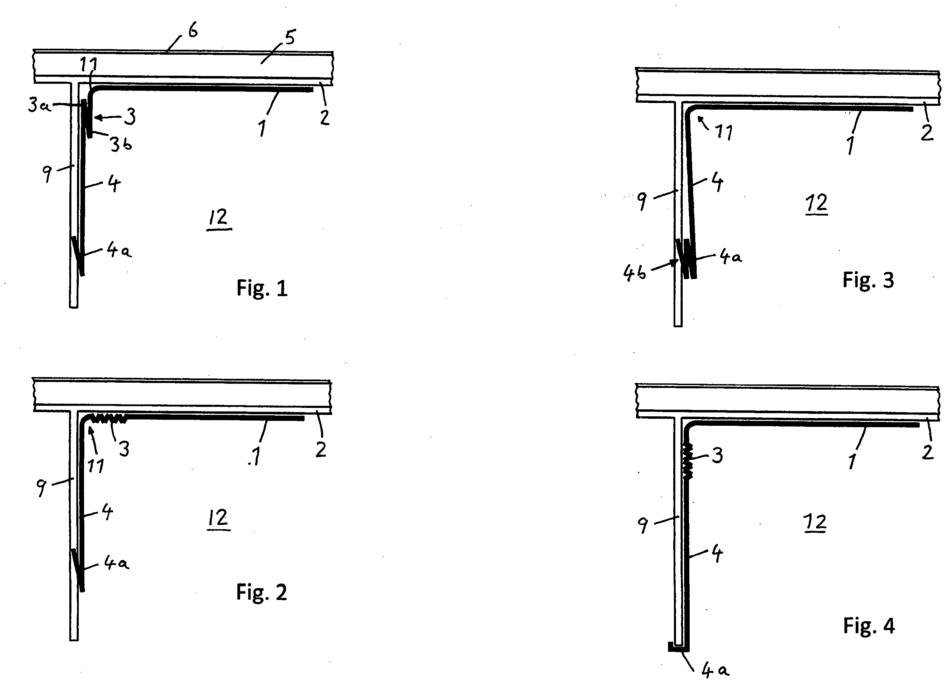

Die Airbagdurchtrittsöffnung ist, wie in Fig. 1 dargestellt, durch eine einzige Airbagklappe 1 verschlossen, die die Gelenkstelle 11 aufweist. Es können aber auch zwei Airbagklappen mit an gegenüberliegenden Seiten angeordneten Gelenkstellen angeordnet sein. Die Airbagklappe(n) ist/sind jeweils über die Gelenkstelle 11 an eine Klappenstützwand 4 angeformt, die sich in das Innere des Raums 12 und damit des Schusskanals erstreckt. Hierbei liegt die Klappenstützwand 4 an der Innenfläche der Schusskanalwand 9 an und ist an dieser befestigt.

Wie in Fig. 1 dargestellt, ist das untere innenseitige Ende der Klappenstützwand 4 nach außen im Querschnitt V- oder U-förmig umgebogen und liegt mit diesem im Querschnitt hakenförmig umgebogenen Bereich 4a im Kunststoffmaterial der Schusskanalwand 9 ein. Alternativ untergreift das V- oder U-förmig umgebogene Ende bzw. Bereich 4a das untere Ende der Schusskanalwand 9, wie in Fig. 4 dargestellt.

In der in Fig. 3 dargestellten Ausführung ist das äußere Ende des umgebogenen Bereichs 4a noch einmal im Querschnitt V- oder U-förmig umgebogen und damit weist das innenseitige Ende der Klappenstützwand 4 einen Z-förmigen Querschnitt auf. Dies ergibt einen weggebenden Bereich. Damit weist das innenseitige insbesondere untere Ende der Klappenstützwand 4 ein Materialreservoir in Form einer Faltung oder Wellung 3 auf, von der der umgebogene Bereich 2a abgebogen ist.

Nahe der Gelenkstelle 11 weist die Airbagklappe (Fig. 2) und/oder die Klappenstützwand 4 (Fig. 1 und 4) einen weggebenden Bereich in Form einer Faltung oder Wellung 3 auf, die als Material gebende Bereiche ein Verlängern bzw. Strecken der Airbagklappe nach außen zulassen, während das Airbagkissen sich entfaltet.

Bei allen obigen Beschreibungen und zeichnerischen Darstellungen und Angaben in den Ansprüchen ist zu beachten, dass die Gelenkstellen, Faltungen, Wellungen und Umbiegungen sich vorzugsweise über die gesamte Länge der jeweiligen Teile bzw. Gegenstände erstrecken.

## Patentansprüche

1. Abdeckungsanordnung über dem Schusskanal eines Airbags mit einer Airbagdurchtrittsöffnung, die mit einer Airbagklappe (1) und einer über der Airbagklappe befestigten insbesondere aufgespritzten Abdeckung (2) aus Kunststoff verschlossen ist, wobei die Abdeckung am Rand der Airbagklappe mindestens eine Sollbruchlinie aufweist, um das Entfalten des Airbagkissens zu ermöglichen, und wobei die Airbagklappe (1) über eine Gelenkstelle (11) mit einer Klappenstützwand (4) angeformt verbunden ist, die auf der Innenseite der Schusskanalwand (9) befestigt anliegt, **dadurch gekennzeichnet,**
a) **dass** das innenseitige Ende der Klappenstützwand (4) nach außen im Querschnitt V- oder U-förmig umgebogen ist und mit diesem hakenförmig umgebogenen Bereich (4a) im Kunststoffmaterial der Schusskanalwand (9) einliegt oder das untere Ende der Schusskanalwand (9) untergreift,
b) **dass** die Airbagklappe (1) und/oder die Klappenstützwand (4) nahe der Gelenkstelle (11) ein Materialreservoir in Form einer Faltung (3) oder Wellung aufweist,
c) **dass** das innenseitige untere Ende (4a) der Klappenstützwand (4) ein Materialreservoir in Form einer Faltung oder Wellung (3) aufweist, von der der umgebogene Bereich (2a) abgebogen ist.

2. Abdeckungsanordnung nach Anspruch 1, **dadurch gekennzeichnet, dass** das äußere Ende des umgebogenen Bereichs (4a) der Klappenstützwand (4) noch einmal im Querschnitt V- oder U-förmig umgebogen ist und damit das innenseitige Ende der Klappenstützwand (4) einen Z-förmigen Querschnitt aufweist.

3. Abdeckungsanordnung nach einem der vorherigen Ansprüche, **dadurch gekennzeichnet, dass** die Airbagklappe (1) und die Klappenstützwand (4) aus einem Verbundwerkstoff bestehen mit mindestens einer Lage aus Kunststoffbändern oder -fasern insbesondere aus thermoplastischem Polypropylen oder Polyester und mindestens einer darauf geschmolzenen Kunststofflage.

4. Abdeckungsanordung nach Anspruch 3, **dadurch gekennzeichnet, dass** die Kunststoffbänder oder -fasern ein Gewebe bilden.

## Claims

1. Cover arrangement above the firing channel of an airbag, having an airbag passage opening, which is closed by an airbag flap (1) and a cover (2) made of plastic which is fastened, in particular moulded on, above the airbag flap, wherein the cover has at least one predetermined breaking line at the edge of the airbag flap in order to allow the airbag cushion to deploy, and wherein the airbag flap (1) is connected in an integrally moulded manner to a flap supporting wall (4) via an articulation point (11), said flap supporting wall bearing in a fastened manner on the inner side of the firing channel wall (9), **characterized in that**
a) the inside end of the flap supporting wall (4) is bent outwards in a V-shaped or U-shaped manner in cross section and lies in the plastics material of the firing channel wall (9) by way of this hook-shaped, bent region (4a) or engages under the lower end of the firing channel wall (9),
b) close to the articulation point (11), the airbag flap (1) and/or the flap supporting wall (4) has a material reservoir in the form of a fold (3) or corrugation,
c) the inside lower end (4a) of the flap supporting wall (4) has a material reservoir in the form of a fold or corrugation (3), away from which the bent region (2a) is bent.

2. Cover arrangement according to Claim 1, **characterized in that** the outer end of the bent region (4a) of the flap supporting wall (4) is bent again in a V-shaped or U-shaped manner in cross section, and the inside end of the flap supporting wall (4) therefore has a Z-shaped cross section.

3. Cover arrangement according to either of the preceding claims, **characterized in that** the airbag flap (1) and the flap supporting wall (4) consist of a composite material with at least one layer of plastics bands or fibres, in particular made of thermoplastic polypropylene or polyester and at least one plastics layer melted thereon.

4. Cover arrangement according to Claim 3, **characterized in that** the plastics bands or fibres form a woven fabric.

## Revendications

1. Agencement de recouvrement au-dessus du canal d'éjection d'un airbag, comprenant une ouverture de passage d'airbag, qui est fermée par un volet d'airbag (1) et un recouvrement (2) en matière plastique fixé, en particulier appliqué par injection, au-dessus du volet d'airbag, le recouvrement présentant sur le bord du volet d'airbag au moins une ligne de rupture privilégiée, afin de permettre le déploiement du coussin d'airbag, et le volet d'airbag (1) étant relié par l'intermédiaire d'un point d'articulation (11) à une paroi de support de volet (4) en étant formé sur celle-ci, qui repose de manière fixée sur le côté intérieur de la paroi de canal d'éjection (9), **caractérisé en ce que**
a) l'extrémité côté intérieur de la paroi de support de volet (4) est recourbée vers l'extérieur dans la section transversale en forme de V ou de U et s'insère par cette zone recourbée en forme de crochet (4a) dans la matière plastique de la paroi de canal d'éjection (9) ou vient en prise par dessous avec l'extrémité inférieure de la paroi de canal d'éjection (9),
b) le volet d'airbag (1) et/ou la paroi de support de volet (4) présentent à proximité du point d'articulation (11) un réservoir de matériau sous la forme d'un pli (3) ou d'une ondulation,
c) l'extrémité inférieure (4a) côté intérieur de la paroi de support de volet (4) présente un réservoir de matériau sous la forme d'un pli ou d'une ondulation (3), à partir duquel la zone recourbée (2a) est courbée.

2. Agencement de recouvrement selon la revendication 1, **caractérisé en ce que** l'extrémité extérieure de la zone recourbée (4a) de la paroi de support de volet (4) est encore une fois recourbée dans la section transversale en forme de V ou de U et ainsi l'extrémité côté intérieur de la paroi de support de volet (4) présente une section transversale en forme de Z.

3. Agencement de recouvrement selon l'une quelconque des revendications précédentes, **caractérisé en ce que** le volet d'airbag (1) et la paroi de support de volet (4) sont constitués d'un matériau composite comprenant au moins une couche de bandes ou de fibres de matière plastique, en particulier de polypropylène ou polyester thermoplastique, et au moins une couche de matière plastique fondue sur celle-ci.

4. Agencement de recouvrement selon la revendication 3, **caractérisé en ce que** les bandes ou les fibres de matière plastique forment un tissu.
